**Europäisches Patentamt**

**European Patent Office**

**Office européen des brevets**

(19)

(11) Publication number: **0 430 723 A2**

## (12) EUROPEAN PATENT APPLICATION

(21) Application number: **90401961.9**

(22) Date of filing: **06.07.90**

(51) Int. Cl.$^5$: **B28B 7/34**, B28B 1/00, B44C 3/10

(30) Priority: **27.11.89 JP 307893/89**

(43) Date of publication of application:
**05.06.91 Bulletin 91/23**

(84) Designated Contracting States:
**DE ES FR GB IT NL SE**

(71) Applicant: **KABUSHIKI-KAISHA YAMAU**
**Yaesu-Tenjin Building 12-56, Daimyo 1-chome**
**Chuo-ku Fukuoka-shi (JP)**

(72) Inventor: **Kawasaki, Masaki**
**171-3, Nishiiribe, Sawara-ku**
**Fukuoka-shi (JP)**

(74) Representative: **Levy, David et al**
**c/o S.A. FEDIT-LORIOT & AUTRES CONSEILS**
**EN PROPRIETE INDUSTRIELLE 38, Avenue**
**Hoche**
**F-75008 Paris (FR)**

(54) **A method for producing concrete products provided with inlaid patterns.**

(57) A method for producing concrete products provided with inlaid patterns includes a) preparing a mold provided with recessed patterns making use of an ultra-violet-ray setting resin, b) casting substrate material into the mold and solidifying the substrate material to produce a block on the mold ; c) peeling off the mold from the block to provide recessed patterns on the surface of the block which was in contact with the recessed patterns on the surface of the mold ; d) filling an ornamenting or coloring material which contains ultra-violet luminous material into the recessed patterns on the surface of the block and solidifying the ornamenting or coloring material ; and then e) grinding the surface of the block to remove excess ornamenting or coloring material from the surface of the block to thereby produce a finished concrete product provided with inlaid patterns on the surface thereof. When the ultra-violet-rays are emitted to the ornamenting material, the surface of the blocks brilliantly and clealy luminates so that an aesthetic change can be achieved besides the change of the brightness and the chroma. Thus, the blocks can be effectively used as wall-forming blocks and the floor-forming blocks.

**EP 0 430 723 A2**

# A METHOD FOR PRODUCING CONCRETE PRODUCTS PROVIDED WITH INLAID PATTERNS

## State of Art

The present invention relates to a method for producing concrete products provided with inlaid patterns.

The concrete products provided with inlaid patterns include normal concrete products, resin (polymer) concrete products, ALC concrete products, plaster boards, fireproof covering materials and fire-resistant building materials.

## Background of Invention

Conventionally, patterns or letters on the surface of the above concrete products are manually produced by applying paints while referring to the original pictures.

The method, however, cannot provide fine or delicate patterns on the surface of the concrete products since the surface thereof is usually rough.

Furthermore, the painted patterns deteriorate in a short period and are peeled off from the concrete products and it is a laborious work to manually paint patterns on each concrete product.

Therefore, the applicant of the present invention has disclosed a method to overcome the above drawbacks in Japanese Patent Application No. 109548/1987 (The title of the invention is : "Method for Producing Concrete Products Provided with Inlaid Patterns").

This method for producing concrete products provided with inlaid patterns substantially comprises : a) preparing a permanent mold provided with recessed patterns by i) applying ultra-violet rays on a layer of an ultra-violet-ray setting resin such that those portions of the resin layer exposed to the rays become solidified while those portions of the resin layer not exposed to the rays remain unsolidified ; and ii) washing out the unsolidified portions from the solidified portions to form the mold having the recessed patterns, b) preparing a waste mold made of a material which is soluble by water, solvent or heat, c) casting substrate material into the waste mold and solidifying the substrate material to produce a block on the mold ; c) melting and removing the waste mold from the block to provide recessed patterns on the surface of the block which was in contact with the recessed patterns on the surface of the mold ; d) filling an ornamenting or coloring material which is different from the substrate material in color into the recessed patterns on the surface of the block and solidifying the ornamenting or coloring material ; and then e) grinding the surface of the block to remove excess ornamenting or coloring material from the surface of the block to thereby produce a finished concrete product provided with inlaid patterns on the surface thereof.

The method, however, still has following defects.

Namely, the ornamenting material has substantially the same composition as the substrate material with the exception of the coloring agent. Accordingly, when the blocks are used for constructing walls or floors, the change on the design can be achieved by the change of color between the ornamenting material and the substrate material so that the designer has little freedom to enhance the aesthetic effect of the floors or walls.

Furthermore, in case these blocks are used as guide blocks in the street or the like, they may work effectively at daytime, but are no more useful at night.

Accordingly, it is an object of the present invention to provide a method for producing concrete products provided with inlaid patterns which can overcome above-mentioned defects of the conventional methods.

In summary, this invention discloses a method for producing concrete products provided with inlaid patterns and substantially comprises : a) preparing a mold provided with recessed patterns by i) applying ultra-violet rays on a layer of an ultra-violet-ray setting resin such that those portions of the resin layer exposed to the rays become solidified while those portions of the resin layer not exposed to the rays remain unsolidified ; and ii) washing out the unsolidified portions from the solidified portions to form the mold having the recessed patterns, b) casting substrate material into the mold and solidifying the substrate material to produce a block on the mold; c) peeling off the mold from the block to provide recessed patterns on the surface of the block which was in contact with the recessed patterns on the surface of the mold ; d) filling an ornamenting or coloring material which contains ultra-violet luminous material into the recessed patterns on the surpface of the block and solidifying the ornamenting or coloring material ; and then e) grinding the surface of the block to remove excess ornamenting or coloring material from the surface of the block to thereby produce a finished concrete product provided with inlaid patterns on the surface thereof.

In the above method, the ornamenting material is unsaturated polyester resin or epoxy-resin which contains ultra-violet-ray luminous material.

According to this invention, since the ornamenting material is made of unsaturated polyester or epoxy-resin which contains ultra-violet-ray luminous material, when the ultra-violet-rays are emitted to the ornamenting material, the surface of the blocks brilliantly and clealy luminates so that an aesthetic change can be achieved besides the change of the brightness and the chroma. Thus, the blocks can be effectively used as wall-forming blocks and the floor-forming blocks.

To be more specific, such blocks may find its most pertinent applicability when used as floor-forming blocks of the disco hall. The blocks also can be used for forming walls of the buildings to make the entirety of the building as an aesthetic object.

The inlaid patterns on the blocks can give completely different color, brightness and chroma between daytime and night. Namely, at daytime where the ultra-violet rays are not emitted on the inlaid patterns, the inlaid pattern exhibits the ordinary daytime color. At night, however, the ultra-violet rays are emitted on the inlaid patterns resulting in the unexpected or surprising beauty thus highly enhancing the ornamental effects of the blocks.

The blocks may be used as guide blocks for leading passersby to their destination. Namely, even at night having little environmental light, when the ultra-violet rays are emitted on the inlaid patterns, the inlaid patterns clealy and brilliantly are exhibited on the surface of the blocks and privides the same guiding effect as at daytime.

## Brief Description of the Drawings

Figure 1 is a partially perspective view of the original used for the method for producing the product provided with inlaid patterns related to this invention.

Figure 2 is a flow chart of the production process.

Figure 3 through 6 are explanatory views of the process of producing the first mold.

Figure 7 is an explanatory view of the process of producing the second mold.

Figure 8 is an explanatory view of the process of casting the substrate material.

Figure 9 is an explanatory view of the process of removing the second mold.

Figure 10 is an explanatory view of the process of filling the ornamenting or coloring material.

Figure 11 is an explanatory view of the process of grinding.

Figure 12 is a perspective view of the product provided with inlaid patterns which is produced in the above process of the production.

Figure 13 is an explanatory view of the process of casting the substrate material in another embodiment.

Figure 14 is an explanatory view of the process of removing the second mold in the above embodiment.

Figure 15 is an explanatory view of the process of filling the ornamenting or coloring materials in the above embodiment.

Figure 16 is an explanatory view of the process of grinding in the above embodiment.

Figure 17 is an explanatory view of the process of casting the substrate material in still another embodiment.

Figure 18 is an explanatory view of the process of removing the second mold in the above embodiment.

Figure 19 is an explanatory view of the process of filling the ornamenting or coloring materials in the above embodiment.

Figure 20 is an explanatory view of the process of grinding in the above embodiment.

Figure 21 is an explanatory view of the process of casting the substrate material in a further embodiment.

Figure 22 is an explanatory view of the process of removing the second mold in the above embodiment.

Figure 23 is an explanatory view of the process of filling the ornamenting or coloring materials in the above embodiment.

Figure 24 is an explanatory view of the process of grinding in the above embodiment.

## Best Mode for Carrying Out the Invention

The method for producing concrete products provided with inlaid patterns which relates to this invention will be explained in detail referring to the embodiments shown in the attached drawings.

## [FIRST EMBODIMENT]

At first, an original 2 which is used for producing the products provided with inlaid patterns of this invention will be explained.

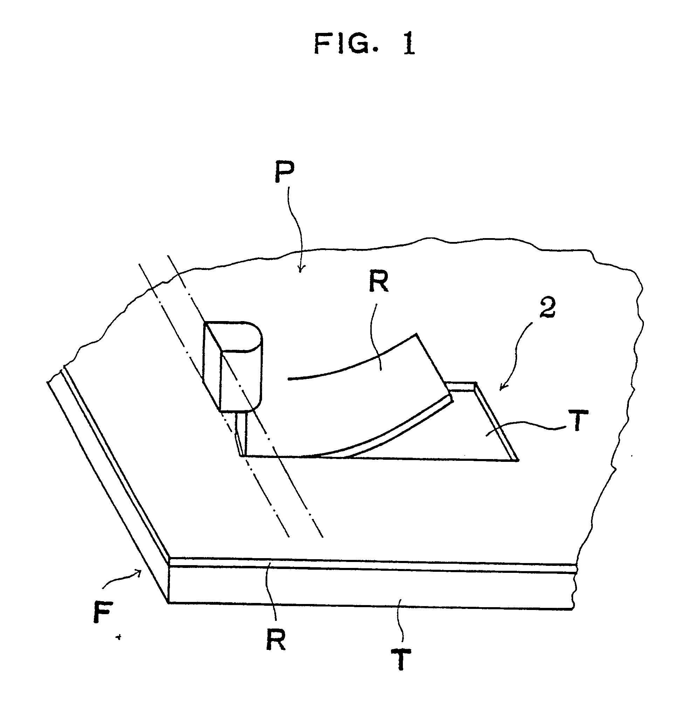

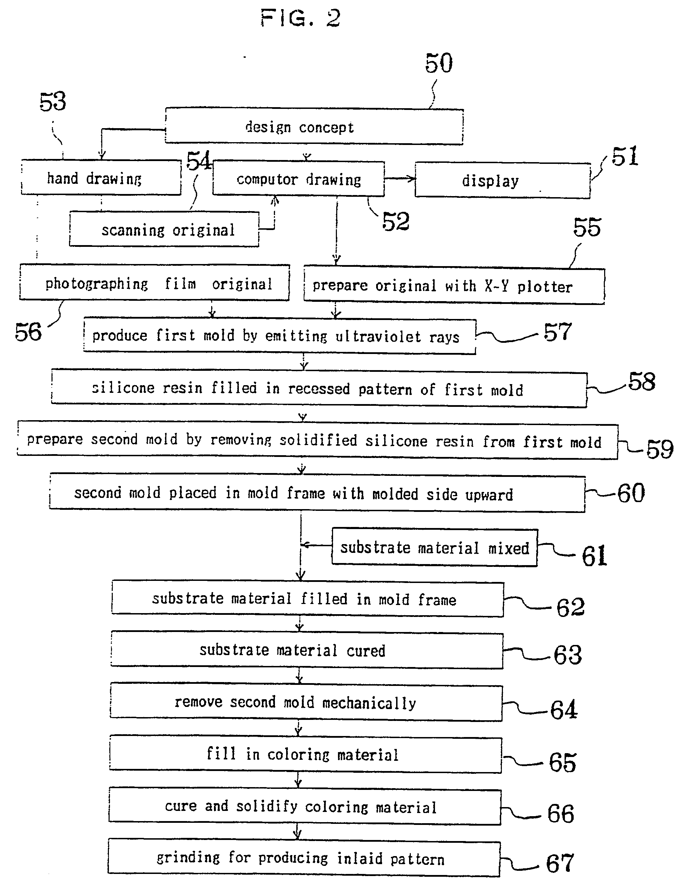

As shown in Fig. 1, the original 2 is a raw film F for making originals which is made of a transparent substrate layer T laminated by a covering layer R, that blocks off light and is removable, and inlaid patterns can be produced, for example, with the method shown on the flow chart in Fig. 2.

Namely, a design concept of a pattern 8 like pictures or letters is decided (step 50).

Then, the image of the pattern is drawn and displayed (step 51) by a computer using a keyboard or a mouse (step 52), or the original is drawn by hand (step 53) and the picture data is input into the computer by using a scanner (step 54).

The picture data which is input into the computer readily enables the shift or change between a positive photo film and a negative photo film, the change on the position and parts of the pattern, and the expansion or the reduction of the picture. Furthermore, letters like plain letters and italics also can be easily changed so that professionals are not needed to make the original pictures which can reduce labor and time remarkably.

Next, based on the image data, an original picture drawing device P such as an X-Y plotter or some other devices is operated such that only the covering layer R of the original 2, which blocks off light, is cut on the basis of the picture data by a cutter C of the original picture drawing device P.

Then, the part which was cut is peeled off from the covering layer R so that the original 2 provided with the pattern 8 to be inlaid, is produced (step 55).

Considering another method of making an original, an original illustration, which is drawn by hand (step 53), can be photographed and the raw film for making the originals F can be used as the original 2 (step 56).

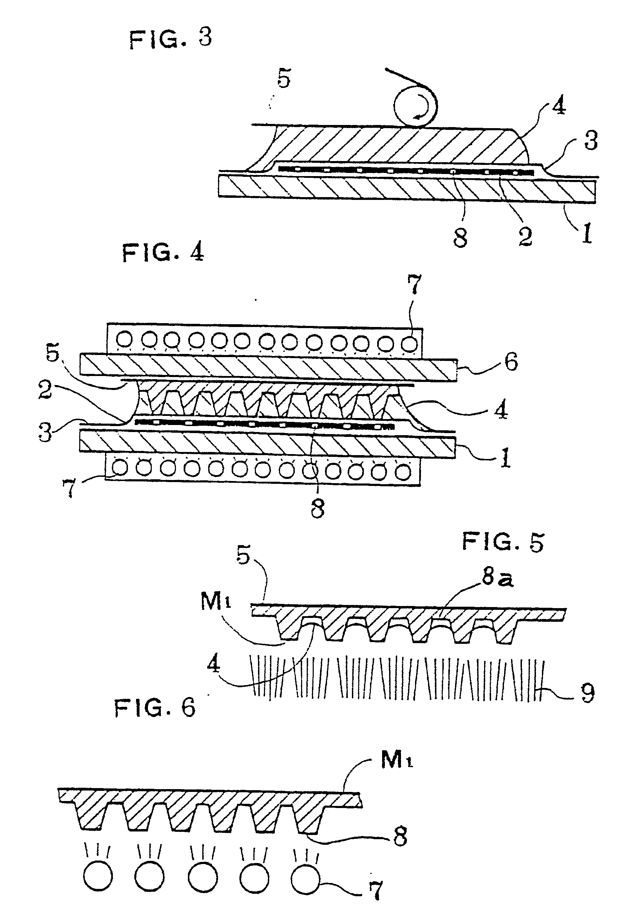

Next, the manner of producing products provided with inlaid patterns using the above-mentioned original 2 will be explained referring to the flow chart in Fig. 2 and schematic views of the production steps or process shown in Fig. 3 to Fig. 10.

In Figs. 3 to 6, a process of producing a first mold $M_1$ is shown.

The original 2 and a covering film 3 are successively placed on the upper surface of a glass plate 1, and a liquid-type ultra-violet-ray setting resin 4 is coated on the upper surface of the covering film 3 and a base film 5 is adhered to the upper surface of the coated resin layer 4 (Fig. 3).

The ultra-violet-ray setting resin 4 may preferably be urethane or polyester photopolymer. The covering film 3 may preferably be made of a polyester or polypropylene film having the thickness of 30 $\mu$m. The base film 5 may preferably be made of a polyester film having the thickness of 100 $\mu$m.

A glass plate 6 is placed on the upper surface of the base film 5 and a pair of ultra-violet-ray emitting lamps 7 are arranged below the glass plate 1 and above the glass plate 6 respectively, and these lamps 7 are switched on to print the patterns 8 of the original 2 on the ultra-violet-ray setting resin 4.

Therefore, the transparent portion of the original 2 whose covering layer R is removed and the ultra-violet-ray setting resin 4 between this transparent portion and the base film 5 becomes solidified (Fig. 4).

Then, the unsolidified part of the resin 4 is washed out by using a washing liquid 9, such as a solvent including a surface active agent, and recessed patterns 8a are produced on the lower surface of the ultra-violet-ray setting resin 4 (Fig. 5).

The ultraviolet rays are again emitted to the solidified part of the ultra-violet-ray setting resin 4 until the solidified part is completely solidified or hardened in its entirety and such a completely solidified part is used as the first mold $M_1$ (step 57) (Fig.6).

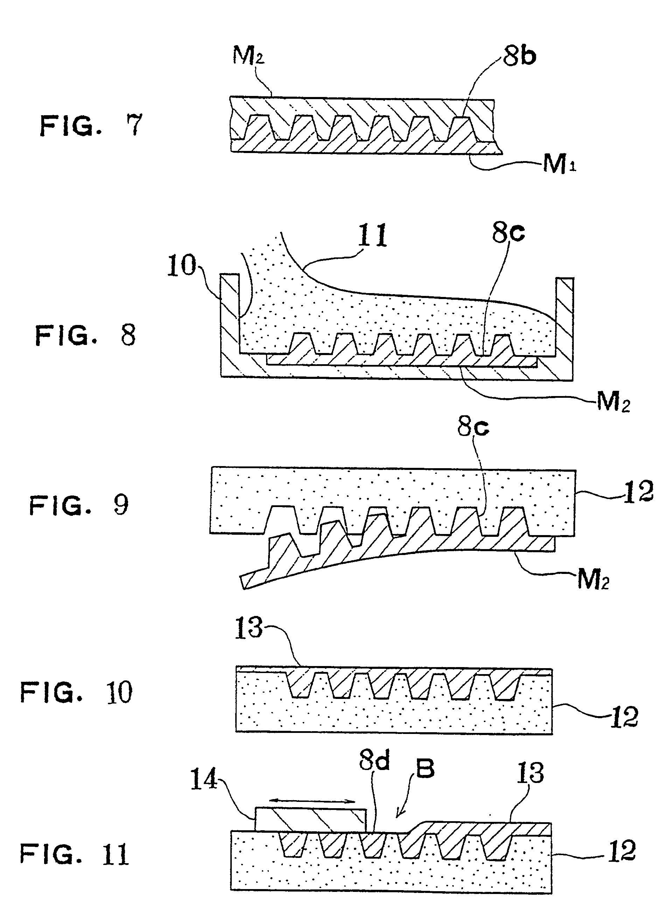

Next, the manufacturing process of the product provided with inlaid patterns using the above original 2 will be explained referring to the flow chart shown in Fig. 2 and the schematic views of the production shown in Figs. 7 to 11.

As shown in Fig. 7, a synthetic resin having a favorable peeling property such as silicone resin or polyurethane resin added with fluorine resin is filled on the surface of the first mold $M_1$, which is produced by the above process (step 58) (Fig. 7).

As for polyurethane resin, the one containing DEFENSA MCF (a surface improving agent including fluorine) made by Dainippon Ink & Chemicals, Inc. can be used.

When this surface improving agent is added into the polyurethane resin, the agent can be spread onto the surface to improve the quality of the surface.

Namely, the surface improving agent is water- and oil- repellant and anti-adhesive, so it is easily removable.

After the synthetic resin, having a favorable peeling property, is solidified, the synthetic resin is removed from the first mold $M_1$ and a second mold $M_2$ is provided with recessed patterns 8b on its surface (step 59), which were transferred from the recessed patterns 8a on the surface of the first mold $M_1$.

The second mold $M_2$ is placed on the bottom of the mold frame 10 with its molded side upward (step 60) and substrate material 11 is mixed (step 61) and filled into the mold frame 10 (step 62) (Fig. 8).

Then, the substrate material 11 is cured for a certain time for hardening (step 63) to prepare a block 12 (Fig. 9).

The fineness of the substrate material 11 is selected depending on the fineness and delicateness of the inlaid patterns 8d of the finished product B provided with inlaid patterns which is explained later. For the finer and more delicate inlaid patterns 8d, the finer material is used.

In addition, as materials for the fine substrate material 11, cement, mortar or plaster and so on which become solidified or hardened by hydration are used. It may be possible to further include silica fume, fly ash or limestone, which is pulverized to a grain size of less than 1 μm, to the cement, mortar or plastar.

Furthermore, the substrate material 11 may include a material made of thermosetting resin such as unsaturated polyester resin to which pulverized aggregate is added.

Following composition is one preferred example for such substrate material.

| | | |
|---|---|---|
| iso-unsaturated polyesther resin | 20 | (parts by weight) |
| shrinkage retarding agent | 8.7 | |
| fly ash ( coarse grain ) | 24.5 | |
| fly ash ( fine grain ) | 36.9 | |
| reinfarcing material | 7.2 | |
| peel-off agent | 2.2 | |
| hardening agent | 0.5 | |

It is desirable to carry out a vacuum defoaming process before casting the mixed substrate material 11 into the mold frame 10 so that the damage on a recessed pattern 8c, which may occur due to the impregnation of air in the substrate material 11 filled into the mold frame 10, can be prevented effectively.

For preventing the impregnation of air into the substrate material 11, it is also possible to mount the mold frame 10 on a centrifuge and to cast the substrate material 11 under pressure.

Then, the block 12 is removed from the mold frame 10 together with the second mold $M_2$ and the second mold $M_2$ is removed from the block 12 mechanically (step 64) (Fig. 9).

After the second mold $M_2$ is removed, a coloring material 13, which is made of unsaturated polyester or epoxy-resin which contains ultra-violet-ray luminous material is filled (step 65) (Fig.10) into recessed patterns 8c on the surface of the block 12, which were in contact with the recessed patterns 8b on the surface of the second mold $M_2$.

Such ultra-violet-ray luminous material contained in the ornamenting material 13 clearly illuminates when the material 13 receives the ultra-violet-rays of specific wave lengths.

The preferred composition of the ornamenting material 13 is descrived in view of following examples.

[ EXAMPLE 1 ]

| | | |
|---|---|---|
| unsaturated polyester resin | 40.00 | % |
| shrinkage preventing agent | 10.00 | % |
| ultra-violet-ray luminous material | 48.00 | % |
| ( fluoro-calcium-silicate as matrix added with activating agent of bismuth) | | |
| coloring agent (organic) | 2.00 | % |

[ EXAMPLE 2 ]

| | | |
|---|---|---|
| unsaturated polyester resin | 26.25 | % |
| ultra-violet-ray luminous material | 50.00 | % |
| ( fluoro-calcium-silicate as matrix added with activating agent of bismuth ) | | |
| filler | 15.00 | % |
| ( calcium carbonate) | | |
| coloring agent (organic) | 2.00 | % |
| shrikage retarding agent | 8.75 | % |

[ EXAMPLE 3 ]

| | | |
|---|---|---|
| Portland cement | 50.00 | % |

```
ultra-violet-ray luminous          40.00  %

material

( fluoro-calcium-silicate as

matrix added with activating

agent of bismuth )

coloring agent (inorganic)         10.00  %
```

As the ultra-violet-ray luminous material, besides the above-mentioned material, manganese, arsenic-activated zinc silicate green-light emitting fluorescent material, manganese-activated magnesium silicate red-light emitting fluorescent material, manganese-activated orthophosphoric-acid zinc-magnesium red-light emitting fluorescent material and so on can be used.

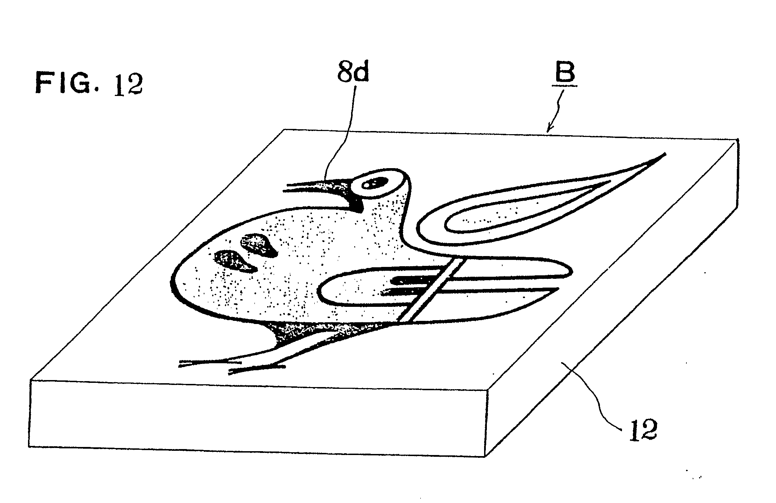

After curing the coloring material 13 until it is completely solidified (step 66), the surface of the block 12 is ground or polished to produce the concrete product B provided with the inlaid patterns 8d using a whetstone 14 (step 67) (Figs. 11 and 12).

On the other hand, a buffing can be applied on the coloring material 13 while maintaining the coloring material 13 in the half-solidified condition without waiting for it to cure and solidify completely and applying water on the coloring material 13.

In this case, since the upper surface of the coloring material 13 applied on the block 12 is slightly indented or recessed, shadows can be produced on the surface of the concrete finished product B provided with inlaid patterns which improves its aesthetical effect as well as prevents slipping when this product is used as a block for making roads or pavements.

It may be also possible to apply hardening retarding agent onto the coloring agent so as to control the depth of indent or recess formed on the coloring material.

Furthermore, steel balls having the diameter of 1 mm can be used for shot peening on the surface of the concrete product B provided with inlaid patterns to produce a unique outer appearance.

As explained above, this embodiment has the following features.

Since the ornamenting material 13 is made of unsaturated polyester or epoxy-resin or cement which contains ultra-violet-ray luminous material, when the ultra-violet-rays are emitted to the ornamenting material, the surface of the concrete products B brilliantly and clealy illuminates so that an aesthetic change can be achieved besides the change of the brightness and the chroma. Thus, the conctrete products B can be effectively used as wall-forming blocks and the floor-forming blocks.

To be more specific, such concrete products B may find its most pertinent applicability when used as floor-forming blocks of the disco hall. The conctrete products B also can be used for forming walls of the buildings to make the entirety of the building as an aesthetic object.

The inlaid patterns on the concrete products B can give completely different color, brightness and chroma between daytime and night. Namely, at daytime where the ultra-violet rays are not emitted on the inlaid patterns, the inlaid pattern exhibits the ordinary daytime color. At night, however, the ultra-violet rays are emitted on the inlaid patterns resulting in the unexpected or surprising beauty thus highly enhancing the ornamental effects of the concrete products B.

The concrete products B may be used as guide blocks for leading passersby to their destination. Namely, even at night having little environmental light, when the ultra-violet rays are emitted on the inlaid patterns, the inlaid patterns clealy and brilliantly are exhibited on the surface of the concrete products B and privides the same guiding effect as at daytime.

Furthermore, the ornamenting material 13 can be made of an inorganic material such as cement which contains ultra-violet-ray luminous material therein. In this case, as coloring agent, inorganic material such as titanium oxide (white), iron oxide (red) or chromium oxide (green) can be used.

The ornamenting material 13 exclusively made of such inorganic material shows excellent ultra-violet ray exposure resistance. Namely, the ultra-violet rays included in sun beams have wide wave range and decompose the resin so that the ornamenting material which is made of resin gradually fade in its color. To the contrary, no such fade of the color occurs on the ornamenting material 13 made of inorganic material.

The ornamenting material 13 which includes unsaturated polyester shrinks at the time of being hardened so that the shrink preventing agent must be included in the ornamenting material 13 For preventing the segregation of shrink preventing agent in the ornamenting material 13 which may be caused by the difference of specific gravity between the shrink preventing agent and the unsaturated polyesther, the delicate treatment of the shrink preventing agent becomes necessary. The ornamenting material 13 which is made of inorganic material is free from such problem.

The ornamenting material 13 which contains high-molecular binder may generate a toxic gas at the time of fire.

[SECOND EMBODIMENT]

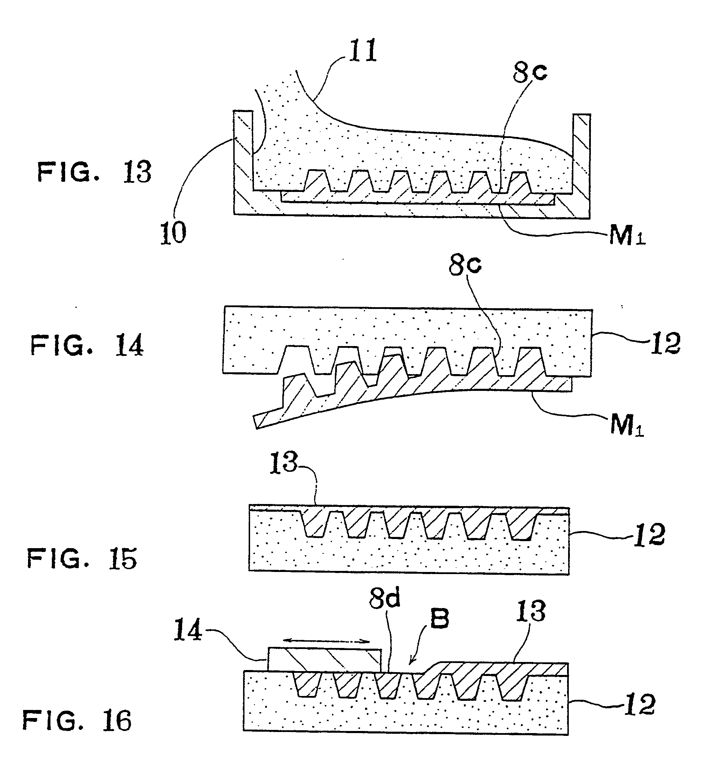

Another embodiment of the method for producing the product provided with inlaid patterns in Figs. 13 to 16 will be explained hereinafter.

This embodiment is substantially characterized in that the first mold $M_1$ is directly used for producing block 12 withoud using the second mold $M_2$.

Namely the first mold $M_1$ is placed at the bottom of the mold frame 10 with its molded side upward and the substrate material 11 is mixed and filled into the mold frame 10 (Fig. 13).

Then, the substrate material 11 is solidified after waiting for a certain time to produce the block 12 (Fig. 14).

As for the substrate material 11, any material which has the same composition as the one in the embodiment explained previously can be used.

Then, the block 12 is removed from the mold frame 10 together with the first mold $M_1$ and the first mold $M_1$ is removed from the block 12 mechanically (Fig. 14). After the first mold $M_1$ is removed, the coloring agent 13 is filled into the recessed patterns 8c on the surface of the block 12, which were in contact with the recessed patterns 8b on the surface of the first mold $M_2$ (Fig.15). After curing the coloring material 13 until being completely solidified, the surface of the block 12 is ground or polished to produce the concrete products B provided with the inlaid pattern 8d using a whetstone 14 (Fig. 16).

[THIRD EMBODIMENT]

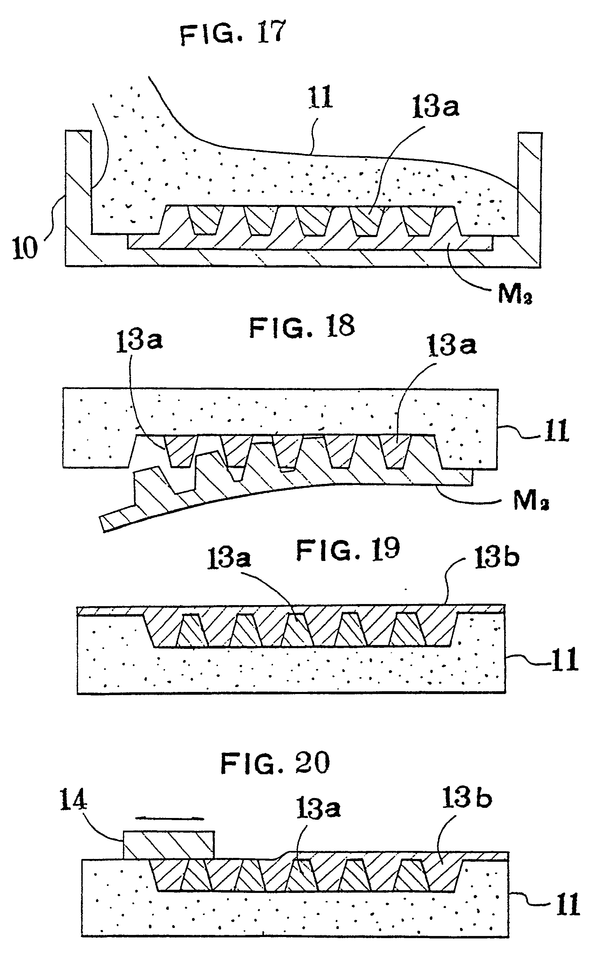

Still another embodiment of the method for producing the product provided with inlaid patterns in Figs. 17 to 20 will be explained hereinafter.

The second mold $M_2$ is placed at the bottom of the mold frame 10 with its molded side upward and in the condition that the first coloring material 13a is filled into the recessed patterns 8b of the second mold $M_2$, the substrate material 11 is mixed and filled into the mold frame 10 (Fig. 17).

Then, the substrate material 11 and the coloring material 13a are solidified after waiting for a certain time to produce the block 12 (Fig. 18).

As for the substrate material 11, any material which has the same composition as the one in the embodiment explained previously can be used.

Then, the block 12 is removed from the mold frame 10 together with the second mold $M_2$ and the second mold $M_2$ is removed from the block 12 mechanically (Fig. 18). After the second mold $M_2$ is removed, the second coloring material 13b, whose composition and color are different from the first coloring material 13a, are filled into the recessed patterns 8c on the surface of the block 12, which were in contact with the recessed patterns 8b on the surface of the second mold $M_2$ (Fig. 19). After curing the coloring material 13 until being completely solidified, the surface of the block 12 is ground or polished to produce the concrete products B provided whith the inlaid pattern 8d using whetstone 14 (Fig. 20).

[FOURTH EMBODIMENT]

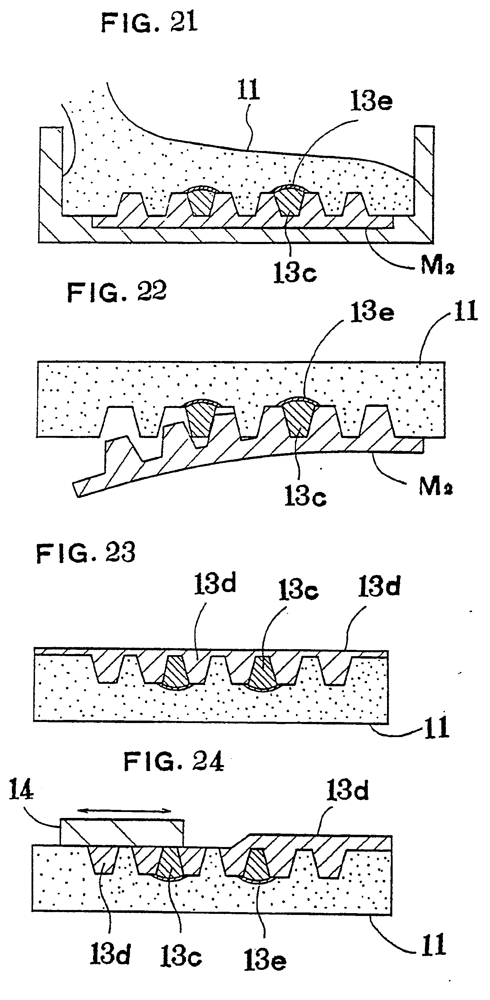

Still another embodiment of the method for producing the product provided with inlaid patterns in Figs. 21 to 24 will be explained hereinafter.

The second mold $M_2$ (or the first mold $M_1$) is placed at the bottom of the mold frame 10 with its molded side upward. Then, the low-melting alloy 13c is filled into some the recessed patterns 8b of the second mold $M_2$ and solidified. Thereafter, the substrate material 11 is filled into the mold frame 10 (Fig. 21).

It is prefareble to preliminary apply a high-molecular adhering agent 13e on the surface of the solidified low-melting alloy 13c so as to increase the adhesive force between the alloy 13c and the substrate 11 while absorbing the difference of volumetric expansion rate between the alloy 13c and the substrate 11.

As preferred composion of the low-melting alloy 13c, followings are considered.

( EXAMPLE 1 )

tin               16.00 (weight  %)

lead              32.00

bismuth           52.00

melting point     95.0 ℃

( EXAMPLE 2 )

bismuth           53.90 (weight  %)

cadmium           20.20

tin               25.90

melting point     102.5 ℃

( EXAMPLE 3 )

bismuth           50.00 (weight  %)

lead              26.70

tin               13.30

cadmium           10.00

The low-melting alloy 13c must have the melting point which is lower than the damaging temperature of the second mold $M_2$ which is 180°C in this embodiment.

Then, the substrate material 11 is solidified after waiting for a certain time to produce the block 12 (Fig. 21).

As for the substrate material 11, any material which has the same composition as the one in the embodiment explained previously can be used.

Then, the block 12 is removed from the mold frame 10 together with the second mold $M_2$ and the second mold $M_2$ is removed from the block 12 mechanically (Fig. 22). After the second mold $M_2$ is removed from the substrate material 11 which produces the block 12 explained before, the coloring material 13d is filled into the recessed patterns 8c on the surface of the block 12, which were in contact with the recessed patterns 8b on the surface of the second mold $M_2$ (Fig. 23). After curing the coloring material 13d until being completely solidified, the surface of the block 12 is ground or polished to produce the concrete products B provided with the inlaid pattern 8d using whetstone 14 (Fig. 24).

The concrete product B thus produced can have the ornamental pattern made of the coloring material 13d and the low-melting alloy 13c wherein the low-melting alloy 13c is used for drawing the contour lines on the surface of the concrete product B.

Accordingly, the concrete product B can have a stained-glass-like pattern on the surface thereof whereby the aesthetic effect of the concrete product B is further improved.

## Claims

1. A method for producing concrete products provided with inlaid patterns comprising :

   a) preparing a block provided with recessed patterns on a surface thereof ;

   b) filling an ornamenting or coloring material which contains ultra-violet luminous material into said recessed patterns on said surface of said block and solidifying said ornamenting or coloring material ; and then

   c) grinding said surface of said block to remove excess ornamenting or coloring material from said surface of said block to thereby produce a finished concrete product provided with inlaid patterns on said surface thereof.

2. A method for producing concrete products provided with inlaid patterns comprising :

   a) preparing a mold provided with recessed patterns by :

   i) applying ultra-violet rays on a layer of an ultra-violet-ray setting resin such that those portions of said resin layer exposed to said rays become solidified while those portions of said resin layer not exposed to said rays remain unsolidified ; and

   ii) washing out said unsolidified portions from said solidified portions to form said mold having said recessed patterns,

   b) casting substrate material into said mold and solidifying said substrate material to produce a block on said mold ;

   c) peeling off said mold from said block to provide recessed patterns on the surface of said block which was in contact with said recessed patterns on said surface of said mold ;

   d) filling an ornamenting or coloring material which contains ultra-violet luminous material into said recessed patterns on said surface of said block and solidifying said ornamenting or coloring material ; and then

   e) grinding said surface of said block to remove excess ornamenting or coloring material from said surface of said block to thereby produce a finished concrete product provided with inlaid patterns on said surface thereof.

3. A method for producing concrete products provided with inlaid patterns comprising :

   a) preparing a first mold provided with recessed patterns by :

   i) applying ultra-violet rays on a layer of an ultra-violet-ray setting resin such that those portions of said resin layer exposed to said rays become solidified while those portions of said resin layer not exposed to said rays remain unsolidified ; and

   ii) washing out said unsolidified portions from said solidified portions to form said first mold having said recessed patterns,

   b) preparing a second mold provided with recessed patterns on its surface by casting mold-forming material in said first mold, thereby forming said second mold ;

   c) casting substrate material into said second mold and solidifying said substrate material to produce a block on said second mold ;

   d) peeling off said second mold from said block to provide recessed patterns on the surface of said block which was in contact with said recessed patterns on said surface of said second mold ;

   e) filling an ornamenting or coloring material which contains ultra-violet luminous material into said recessed patterns on said surface of said block and solidifying said ornamenting or coloring material ; and then

   f) grinding said surface of said block to remove excess ornamenting or coloring material from said surface of said block to thereby produce a finished concrete product provided with inlaid patterns on said surface thereof.

4. A method for producing concrete products provided with inlaid patterns according to any one of preceding claims 1 to 3, wherein said ornamenting material is unsaturated polyester resin which contains ultra-violet-ray luminous material.

5. A method for producing concrete products provided with inlaid patterns according to any one of preceding claims 1 to 3, wherein said ornamenting material is epoxy-resin which contains ultra-violet-ray luminous material.

6. A method for producing concrete products provided with inlaid patterns according to any one of preceding claims 1 to 3, wherein said ornamenting material is cement which contains ultra-violet-ray luminous material.

## FIG. 1

# FIG. 2

50 design concept

53 hand drawing

54 scanning original

52 computor drawing

51 display

55 prepare original with X-Y plotter

56 photographing film original

57 produce first mold by emitting ultraviolet rays

58 silicone resin filled in recessed pattern of first mold

59 prepare second mold by removing solidified silicone resin from first mold

60 second mold placed in mold frame with molded side upward

61 substrate material mixed

62 substrate material filled in mold frame

63 substrate material cured

64 remove second mold mechanically

65 fill in coloring material

66 cure and solidify coloring material

67 grinding for producing inlaid pattern

FIG. 3

FIG. 4

FIG. 5

FIG. 6

FIG. 7

$M_2$         8b

$M_1$

FIG. 8

10     11     8c

$M_2$

FIG. 9

8c

12

$M_2$

FIG. 10

13

12

FIG. 11

14    8d   B    13

12

FIG. 12

FIG. 13

FIG. 14

FIG. 15

FIG. 16

FIG. 17

FIG. 18

FIG. 19

FIG. 20

FIG. 21

FIG. 22

FIG. 23

FIG. 24